# EUROPEAN PATENT APPLICATION

(11) **EP 0 638 865 A1**
(43) Date of publication of application: **15.02.1995**
(21) Application number: 94202247.6
(22) Date of filing: 03.08.1994
(51) Int. Cl.: G06F 12/06

(54) **Arrangement for linking a processor to a memory, and system comprising a processor, a memory and an arrangement for linking the processor to the memory**

(30) Priority: 11.08.1993 NL 9301389
(71) Applicant: Koninklijke PTT Nederland N.V., NL-2509 CH The Hague (NL)
(72) Inventor: Vankan, Franciscus Anna Gerardus, NL-5045 CC Tilburg (NL); de Lange, Martin Klaas, NL-2272 NM Voorburg (NL); Pieterse, Rob, NL-2042 CA Zandvoort (NL)

(57) **Abstract**

A known arrangement for linking a processor and a memory creates additional address space which is larger than the available address space of the processor and offers address adjustments of the addressing, inter alia by loading, in response to a first address, data originating from the processor as the start address signal for the memory, many registers being used, owing to which this arrangement is complex and consequently slow and expensive. By means of the simple and consequently fast and inexpensive arrangement according to the invention there is generated by the arrangement, in response to a second address of the processor, a further address signal for the memory, which further address signal is a function of the start address signal and the number of second addresses generated.

## Description

### A Background of the invention

The invention relates to an arrangement for linking a processor to a memory, which arrangement is provided with means for generating, in response to a first address originating from the processor, data originating from the processor as a start address signal for the benefit of the memory.

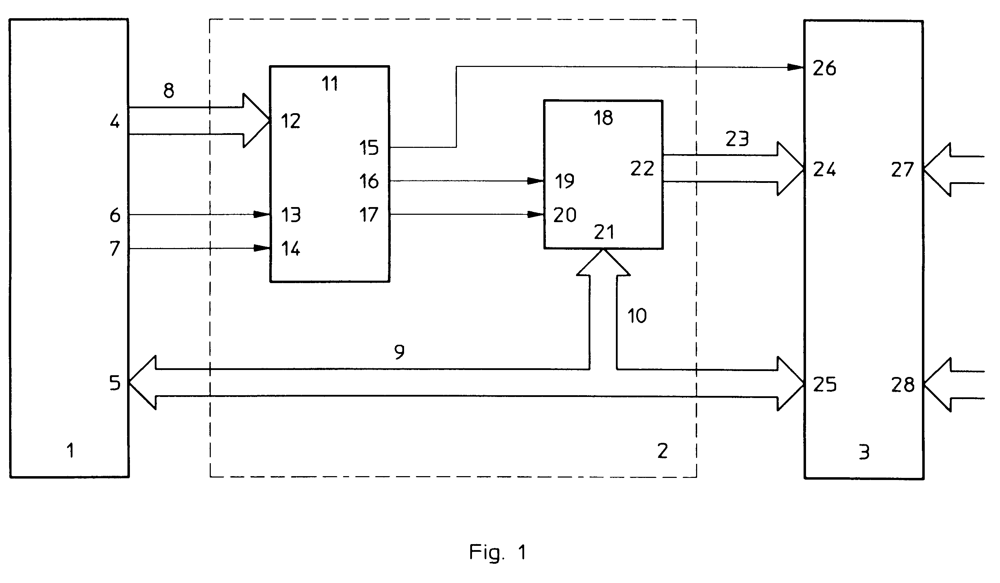

Such an arrangement is disclosed by EP 0218523. The arrangement described therein comprises an ACCESS controller for receiving the first address originating from the processor CPU, and ACCESS registers for receiving data originating from the processor (see, inter alia, Fig. 1 of EP 0218523, where bus 20 functions as an address bus and bus 10 functions as a data bus, further see, inter alia, page 6, line 11-27 of EP 0218523). The data originating from the processor CPU may, in this case, represent both genuine data destined for the memory RAM, and an address signal destined for the RAM (see, inter alia, page 1, line 22-29 of EP 0218523). With this known arrangement it is thus possible to create additional address space which is larger than the available address space of the processor (indirect addressing). In addition, the known arrangement has so-called operating modes, such as the sequential access mode, where START registers and STOP registers indicate the boundaries of address space, present in the RAM, which is used as a FIFO and is implemented as a circular buffer, and where IN PTR registers and OUT PTR registers indicate the subsequent write and read address signals and IN INCR registers and OUT INCR registers indicate the auto- increments for write and read actions (address adjustment). It is thus possible to write data into a register and then automatically transfer it to the next available address space.

A drawback of such a known arrangement is, inter alia, that many registers are required therein for supervising the arrangement and for the purpose of indirect addressing and automatic indexing. These registers make the arrangement complex and thus expensive and slow.

### B Summary of the invention

The object of the invention is, inter alia, to provide an arrangement of the type mentioned in the preamble, by means of which additional address space is created which is larger than the available address space of the processor, while the arrangement should further be of simple design and thus less expensive and faster than existing arrangements.

The arrangement according to the invention to this end is characterized in that the arrangement is provided with means for generating, in response to a second address originating from the processor, a further address signal for the benefit of the memory, which further address signal is a function of the start address signal and a number of second addresses received.

By regarding data supplied via a bus (in response to the first address) as the start address signal for addressing a memory, and then storing data supplied via the same bus (in response to the second address) as genuine data in the memory at the location of the start address signal, whereafter the further address signal is generated as a function of the start address signal and the number of times that the second address has been received (such as, for example, a simple incrementing by a constant value), an arrangement is obtained whose design is particularly simple.

The invention is based, inter alia, on the insight that two addresses only are required in order to be able to distinguish from one another a start address signal supplied as data and genuine data supplied as data, the number of times that the second address is received being sufficiently distinctive, in combination with the start address signal, to be able to store the genuine data supplied as data, and further genuine data supplied as data, at successive locations of the memory.

A first embodiment of the arrangement according to the invention is characterized in that the arrangement is provided with means for receiving, in response to a write signal originating from the processor, data originating from the processor and feeding this data to the memory at a location corresponding to the further address signal, and for receiving, in response to a read signal originating from the processor, data originating from the memory, which data is located in the memory at a location corresponding to the further address signal, and feeding this data to the processor.

According to this embodiment, the larger additional address space is created both for the purpose of read actions and for the purpose of write actions.

A second embodiment of the arrangement according to the invention is characterized in that the arrangement comprises means for generating, in response to a third address originating from the processor, data originating from the processor as an other address signal for the benefit of the memory, and for generating, in response to a fourth address originating from the processor, the other address signal for the benefit of the memory.

According to this embodiment, data supplied via the bus (in response to the third address) is regarded as an other address signal for addressing the memory, and data subsequently supplied via the same bus (in response to the fourth address) is stored as genuine data in the memory at the location of the other address signal, without the further address signal being generated. Thus it is also possible to store data in the memory without address adjustment taking place. In general, the third address and the first address will coincide, in order to make the arrangement as efficient as possible.

A third embodiment of the arrangement according to the invention is characterized in that the arrangement is provided with means for receiving, in response to a write signal originating from the processor, data originating from the processor and feeding this data to the memory at a location corresponding to the other address signal, and for receiving, in response to a read signal originating from the processor, data originating from the memory, which data is located in the memory at a location corresponding to the other address signal, and feeding this data to the processor.

According to this embodiment, the larger additional address space is created both for the purpose of write actions and for the purpose of read actions, without address adjustment having to take place.

A fourth embodiment of the arrangement according to the invention is characterized in that the first address and the second address each correspond to data which comprises a first number of bits, and the fourth address corresponds to data which comprises a second number of bits, which differs from the first number of bits.

According to this embodiment, the first address and the second address (and frequently also the third address) correspond to data which consists of the first number of bits, which number is chosen, for example, to be equal to two bytes, while the fourth address corresponds to data which consists of the second (smaller) number of bits, for example one byte, for the purpose of distinction.

A fifth embodiment of the arrangement according to the invention is characterized in that the means are provided with
- an address input, linkable to the processor, for receiving addresses,
- a data in/output linkable to the processor,
- an address output, linkable to the memory, for generating addresses,
- a data in/output linkable to the memory,
- detection means, linked to the address input, for detecting addresses,
- counting means which are provided with a load input, linked to the data in/output, for loading data originating from the processor as address signals, with a count output, linked to the address output, for generating address signals, with a load control input, linked to the detection means, for receiving a load control signal, and with a count control input, linked to the detection means, for receiving a count control signal.

A sixth embodiment of the arrangement according to the invention is characterized in that the means are further provided with
- a read/write input, linkable to the processor, for receiving read signals and write signals, the detection means being linked to the read/write input, and
- with a control input, linkable to the processor, for receiving control signals which correspond to addresses and are representative of numbers of bits whereof the corresponding addresses consist, the detection means being linked to the control input.

The fifth and the sixth embodiment of the arrangement according to the invention are formed by implementations which are simple and therefore are inexpensive and fairly robust.

Obviously it is possible to combine at will at least two of the embodiments mentioned of the arrangement according to the invention.

The invention further relates to a system comprising a processor, a memory and an arrangement for linking the processor to the memory, which arrangement is provided with means for generating, in response to a first address originating from the processor, data originating from the processor as a start address signal for the benefit of the memory.

The system according to the invention is characterized in that the arrangement is provided with means for generating, in response to a second address originating from the processor, a further address signal for the benefit of the memory, which further address signal is a function of the start address signal and a number of second addresses received.

By regarding data supplied via a bus (in response to the first address) as the start address signal for addressing a memory, and then storing data supplied via the same bus (in response to the second address) as genuine data in the memory at the location of the start address signal, whereafter the further address signal is generated as a function of the start address signal and the number of times that the second address has been received (such as, for example, a simple incrementing by a constant value), an arrangement is obtained whose design is particularly simple.

A first embodiment of the system according to the invention is characterized in that the arrangement is provided with means for receiving, in response to a write signal originating from the processor, data originating from the processor and feeding this data to the memory at a location corresponding to the further address signal, and for receiving, in response to a read signal originating from the processor, data originating from the memory, which data is located in the memory at a location corresponding to the further address signal, and feeding this data to the processor.

According to this embodiment, the larger additional address space is created both for the purpose of read actions and for the purpose of write actions.

A second embodiment of the system according to the invention is characterized in that the arrangement comprises means for generating, in response to a third address originating from the processor, data originating from the processor as an other address signal for the benefit of the memory, and for generating, in response to a fourth address originating from the processor, the other address signal for the benefit of the memory.

According to this embodiment, data supplied via the bus (in response to the third address) is regarded as an other address signal for addressing the memory, and data subsequently supplied via the same bus (in response to the fourth address) is stored as genuine data in the memory at the location of the other address signal, without the further address signal being generated. Thus it is also possible to store data in the memory without address adjustment taking place. In general, the third address and the first address will coincide, in order to make the arrangement as efficient as possible.

A third embodiment of the system according to the invention is characterized in that the arrangement is provided with means for receiving, in response to a write signal originating from the processor, data originating from the processor and feeding this data to the memory at a location corresponding to the other address signal, and for receiving, in response to a read signal originating from the processor, data originating from the memory, which data is located in the memory at a location corresponding to the other address signal, and feeding this data to the processor.

According to this embodiment, the larger additional address space is created both for the purpose of write actions and for the purpose of read actions, without address adjustment having to take place.

A fourth embodiment of the system according to the invention is characterized in that the first address and the second address each correspond to data which comprises a first number of bits, and the fourth address corresponds to data which comprises a second number of bits, which differs from the first number of bits.

According to this embodiment, the first address and the second address (and frequently also the third address) correspond to data which consists of the first number of bits, which number is chosen, for example, to be equal to two bytes, while the fourth address corresponds to data which consists of the second (smaller) number of bits, for example one byte, for the purpose of distinction.

A fifth embodiment of the system according to the invention is characterized in that the means are provided with
- an address input, linked to the processor, for receiving addresses,
- a data in/output linked to the processor,
- an address output, linked to the memory, for generating addresses,
- a data in/output linked to the memory,
- detection means, linked to the address input, for detecting addresses,
- counting means which are provided with a load input, linked to the data in/output, for loading data originating from the processor as address signals, with a count output, linked to the address output, for generating address signals, with a load control input, linked to the detection means, for receiving a load control signal, and with a count control input, linked to the detection means, for receiving a count control signal.

A sixth embodiment of the system according to the invention is characterized in that the means are further provided with
- a read/write input, linked to the processor, for receiving read signals and write signals, the detection means being linked to the read/write input, and
- with a control input, linked to the processor, for receiving control signals which correspond to addresses and are representative of numbers of bits the corresponding addresses consist of, the detection means being linked to the control input.

The fifth and the sixth embodiment of the system according to the invention are formed by implementations which are simple and therefore are inexpensive and fairly robust.

Obviously it is possible to combine at will at least two of the embodiments mentioned of the system according to the invention.

### C Reference

■ EP 0218523

### D Illustrative embodiment

The invention will be explained in more detail with reference to an illustrative embodiment depicted in Fig. 1, in which:
Fig. 1 shows a system according to the invention comprising a processor, a memory and an arrangement according to the invention for linking the processor to the memory.

The system depicted in Fig. 1 comprises a processor 1, a memory 3 and an arrangement 2 for linking the processor 1 to the memory 3. Arrangement 2 consists of detection means 11 and counting means 18. Processor 1 is equipped with
- an address output 4 which is linked, via an address bus 8, to address input 12 of detection means 11,
- a data in/output 5 which is linked, via a data bus 9, to a data in/output 25 of memory 3 and further, via a data bus 10, to a load input 21 of counting means 18,
- a read/write output 6 which is linked to a read/write input 13 of detection means 11, and
- a control output 7 which is linked to a control input 14 of detection means 11.

Detection means 11 are further equipped with
- a control output 15 which is linked to a control input 26 of memory 3,
- a count control output 16 which is linked to a count control input of counting means 18, and
- a load control output 17 which is linked to a load control input 20 of counting means 18.

Counting means 18 are further equipped with a count output 22 which is linked, via an address bus 23, to an address input 24 of memory 3, and memory 3 is further equipped with a further address input 27 and a further data in/output 28 if memory 3 is formed by a so- called Dual Ported RAM or DPR. The address input 12 of detection means 11 forms an address input of arrangement 2, and count output 22 forms an address output of arrangement 2. Data bus 9 twice forms a data in/output of arrangement 2, read/write input 13 of detection means 11 forms a read/write input of arrangement 2, and control input 14 of detection means 11 forms a control input of arrangement 2.

The system depicted in Fig. 1 works as follows. Processor 1 generates, on address output 4, a first address, for example hexadecimal (=0x) 352,353 and generates, in read/write output 6, a write signal and generates, on control output 7, a control signal which is representative of the number of bits or bytes of which the addresses generated consist, in this case 2 bytes. Processor 1 further generates, on data in/output 5 at the first address given, a data signal which represents a start address signal, for example hexadecimal (=0x) 1000. Detection means 11 receive, via address bus 8, the first address on address input 12 and ascertain this by means of detection. Further, detection means 11 receive the write signal on read/write input 13 and the control signal on control input 14. In response thereto, detection means 11 generate a load control signal on load control output 17, which signal arrives at load control input 20 of counting means 18. In response thereto, counting means 18 load the start address signal which originates from data in/output 5, is supplied via data bus 9 and data bus 10 to load input 21 and subsequently appears on count output 22 and is fed to address input 24 via address bus 23.

Processor 1 then generates, on address output 4, a second address, for example hexadecimal 350,351 and generates, on read/write output 6, a write signal and generates, on control output 7, a control signal which is representative of the number of bits or bytes of which the data generated consists, in this case 2 bytes. Further, processor 1 generates, on data in/output 5 at the second address given, a data signal which represents a genuine data signal, for example hexadecimal AAAA. Detection means 11 receive, via address bus 8, the second address on address input 12 and ascertain this by means of detection. Further, detection means 11 receive the write signal on read/write input 13 and the control signal on control input 14. In response thereto, detection means 11 generate a memory load signal on control output 15, which is fed to control input 26, in response to which memory 3 stores, via data in/output 25 and at the location of the start address signal supplied via address bus 23, the genuine data signal supplied via data bus 9. Detection means 11 then generate a count control signal on count control output 16, which is fed to count control input 19. In response thereto, counting means 18 increment their count state, which at that moment is equal to the value of the start address signal, by a specific value, for example the value two, to, for example, hexadecimal 1002, which value appears at count output 22. In so doing, it is therefore important that counting means 18 increment their count state only after the genuine data has been stored in memory 3, which can be achieved, for example, by applying, in detection means 11, a delay by means of which the count control signal is generated only at a time sufficiently long after the load control signal, so that the genuine data can be stored in memory 3 at the location of the count state before said count state is increased.

Processor 1 then again generates, on address output 4, the second address, for example hexadecimal 350,351 and generates, on read/write output 6, a write signal and generates, on control output 7, a control signal which is representative of the number of bits or bytes of which the data generated consists, in this case 2 bytes. Further, processor 1 generates, on data in/output 5 at the second address given, a data signal which represents a different genuine data signal, for example hexadecimal BBBB. Detection means 11 receive, via address bus 8, the second address on address input 12 and ascertain this by means of detection. Further, detection means 11 receive the write signal on read/write input 13 and the control signal on control input 14. In response thereto, detection means 11 generate a memory load signal on control output 15, which is fed to control input 26, in response to which memory 3 stores, via data in/output 25 and at the location of the count state (the start address signal incremented by the particular value) supplied via address bus 23, the different genuine data signal supplied via data bus 9. Detection means 11 then generate a count control signal on count control output 16, which is fed to count control input 19. In response thereto, counting means 18 increment their count state by, for example, the value two, to, for example, hexadecimal 1004, which value appears at count output 22.

The mode of operation described can, in brief, be depicted thus:
- write Ox 352 Ox 00 (write byte)
- write Ox 353 Ox 10 (write byte)
- write Ox 350 Ox AAAA (write word)
- write Ox 350 Ox BBBB (write word)
By means of the arrangement according to the invention it is possible, on the basis of only two addresses to be generated by processor 1, to load memory 3 with data, a start address transmitted via data bus 9 and 10 being fed, with the first address, to memory 3 and data transmitted via data bus 9 being stored, with the second address, in the memory, from the start address which is further incremented, in response to every second address, and is consequently a function of the start address and the number of second addresses received. Obviously, many other functions can be used. The number of second addresses received should, in this context, not be understood in too literal a sense: thus it is possible for the second address to remain present continuously, as a result of clock pulse signals (not shown in Fig. 1) being used, or of the detection means being activated and deactivated by means of control signals (not shown in Fig. 1). There always remains, as the essential aspect, the number of times that genuine data has been generated, in combination with the second address, by processor 1.

If processor 1 generates, on address output 4, a third address, for example hexadecimal 34E,34F and generates, on read/write output 6, a write signal and generates, on control output 7, a control signal which is representative of the number of bits or bytes of which the data generated consists, in this case 2 bytes, the operation proceeds as follows. Processor 1 further generates, on data in/output 5 at the given third address, a data signal which represents an other address signal, for example hexadecimal 9000. Detection means 11 receive, via address bus 8, the first address on address input 12 and ascertain this by means of detection. Detection means 11 further receive the write signal on read/write input 13 and the control signal on control input 14. In response thereto, detection means 11 generate a load control signal on load control output 17 which arrives at load control input 20 of counting means 18. In response thereto, counting means 18 load the other address signal which originates from data in/output 5, is supplied to load input 21 via data bus 9 and data bus 10 and then appears on count output 22 and, via address bus 23, is fed to address input 24.

Processor 1 then generates, on address output 4, a fourth address, for example hexadecimal 34C,34D and generates, on read/write output 6, a write signal and generates, on control output 7, a control signal which is representative of the number of bits or bytes of which the addresses generated consist, in this case 2 bytes. Further, processor 1 generates, on data in/output 5 at the fourth address given, a data signal which represents a genuine data signal, for example hexadecimal CCCC. Detection means 11 receive, via address bus 8, the fourth address on address input 12 and ascertain this by means of detection. Further, detection means 11 receive the write signal on read/write input 13 and the control signal on control input 14. In response thereto, detection means 11 generate a memory load signal on control output 15, which is fed to control input 26, in response to which memory 3 stores, via data in/output 25 and at the location of the other address signal supplied via address bus 23, the genuine data signal supplied via data bus 9. Thereafter, however, detection means 11 do not then generate a count control signal, and counting means 18 do not, therefore, increment their count state which, at that moment, is equal to the value of the other address signal.

The mode of operation can, in brief, be depicted thus:
- write Ox 34E Ox 00 (write byte)
- write Ox 34F Ox 90 (write byte)
- write Ox 34C Ox CCCC (write word)
It is also possible, by means of this arrangement according to the invention, on the basis of two further addresses to be generated by processor 1, to load memory 3 once with data, a different address transmitted via data bus 9 and 10 being fed, with the third address, to memory 3 and data transmitted via data bus 9 being stored, with the fourth address, in the memory at the location of the different address, and without address adjustment occurring. According to a preferred embodiment, the first and the third address coincide, which is possible as a result of both addresses to be transmitted by processor 1 corresponding only to the address signals transmitted as data.

Single-shot (without address adjustment) writing could also be achieved by employing, instead of the fourth address (and possibly the third address) which corresponds to data which comprises the same number of bits or bytes as data corresponding to the first address and to the second address, a different fourth address which corresponds to data which comprises a different (smaller) number of bits or bytes. This should then be indicated via the control signal to be transmitted between control output 7 and control input 14 and offers the possibility of letting the different fourth address coincide with the second address (for example if the second address corresponds to data which comprises two bytes, the different fourth address could correspond with data comprising one byte). In that case, data which corresponds to the second address (= different fourth address) and comprises two bytes is stored with address adjustment, while data which corresponds to the second address (= fourth address) and comprises one byte is stored without address adjustment, the control signal to be transmitted between control output 7 and control input 14 in the one case, for example, being logical one and in the other case, for example, being logical zero.

Together, detection means 11, counting means 18 and data buses 9 and 10 form
- means for generating, in response to a first address originating from the processor, data originating from the processor as a start address signal for the benefit of the memory,
- means for generating, in response to a second address originating from the processor, a further address signal for the benefit of the memory, which further address signal is a function of the start address signal and a number of second addresses received,
- means for generating, in response to a third address originating from the processor, data originating from the processor as an other address signal for the benefit of the memory, and for generating, in response to a fourth address originating from the processor, the other address signal for the benefit of the memory,
- means for receiving, in response to a write signal originating from the processor, data originating from the processor and feeding this data to the memory at a location corresponding to the further or other address signal, and for receiving, in response to a read signal originating from the processor, data originating from the memory, which data is located in the memory at a location corresponding to the further or other address signal, and feeding this data to the processor.

Detection means 11 can be implemented in a manner known to those skilled in the art by using, inter alia, two comparators, the first comparator detecting the first address by comparison of the signal supplied via address bus 8 with a first set signal, and the second comparator detecting the second address by comparison of the signal supplied via address bus 8 with a second set signal. In the case of identity, the first comparator generates the load control signal, while the second comparator, in the case of identity, generates the memory load signal and, with some delay, the count control signal. Said delay can be effected, in this context, both by using a so-called delay line and by using a counter of clock pulse signals (which are not shown in Fig. 1). If the third and the fourth address are employed, it would further be possible to use a third and a fourth comparator, which third comparator then shows similarity with the first comparator, and which fourth comparator then, in the case of identity, does generate the load control signal but does not generate the count control signal. In the case of the second and the fourth address coinciding and the first and the third address coinciding, the third and fourth comparator may be omitted, but the control signal present on control input 14 should be involved, in a manner known to those skilled in the art, in the count control signal being or not being generated, for example via logic circuits.

Counting means 18 can be implemented, in a manner known to those skilled in the art, by using a counter which, for example, is able to increment, in response to different single count control signals, the count state by different values (for example one or two), or by using a counter which, in response to a single or double count control signal, increments the count state by, for example, one or, for example, two, respectively.

The illustrative embodiment described hereinabove only relates to the writing of data from processor 1 in memory 3. In this case, data in/output 5 is in fact an output, and data in/output 25 is in fact an input. Obviously, the invention also relates to the reading of data by processor 1 from memory 3, data in/output 25 being, in fact, an output. In this case, however, data in/output 5 is both an input and an output, since counting means 18 should be loaded, from processor 1, with the start address signal and/or the other address signal. In addition, combinations are also possible where data in/outputs 5 and 25 in fact have both an input function and an output function. Via read/write output 6, processor 1 generates a read signal if reading is required, and a write signal if writing is required, which signals are received by detection means and, for example via the memory load signal from control output 15 or via a link not shown in Fig. 1, are passed to memory 3.

## Claims

1. Arrangement for linking a processor to a memory, which arrangement is provided with means for generating, in response to a first address originating from the processor, data originating from the processor as a start address signal for the benefit of the memory, characterized in that the arrangement is provided with means for generating, in response to a second address originating from the processor, a further address signal for the benefit of the memory, which further address signal is a function of the start address signal and a number of second addresses received.

2. Arrangement according to Claim 1, characterized in that the arrangement is provided with means for receiving, in response to a write signal originating from the processor, data originating from the processor and feeding this data to the memory at a location corresponding to the further address signal, and for receiving, in response to a read signal originating from the processor, data originating from the memory, which data is located in the memory at a location corresponding to the further address signal, and feeding this data to the processor.

3. Arrangement according to Claim 1 or 2, characterized in that the arrangement comprises means for generating, in response to a third address originating from the processor, data originating from the processor as an other address signal for the benefit of the memory, and for generating, in response to a fourth address originating from the processor, the other address signal for the benefit of the memory.

4. Arrangement according to Claim 3, characterized in that the arrangement is provided with means for receiving, in response to a write signal originating from the processor, data originating from the processor and feeding this data to the memory at a location corresponding to the other address signal, and for receiving, in response to a read signal originating from the processor, data originating from the memory, which data is located in the memory at a location corresponding to the other address signal, and feeding this data to the processor.

5. Arrangement according to Claim 3 and 4, characterized in that the first address and the second address each correspond to data which comprises a first number of bits, and the fourth address corresponds to data which comprises a second number of bits, which differs from the first number of bits.

6. Arrangement according to any one of the preceding claims, characterized in that the means are provided with
- an address input, linkable to the processor, for receiving addresses,
- a data in/output linkable to the processor,
- an address output, linkable to the memory, for generating addresses,
- a data in/output linkable to the memory,
- detection means, linked to the address input, for detecting addresses,
- counting means which are provided with a load input, linked to the data in/output, for loading data originating from the processor as address signals, with a count output, linked to the address output, for generating address signals, with a load control input, linked to the detection means, for receiving a load control signal, and with a count control input, linked to the detection means, for receiving a count control signal.

7. Arrangement according to Claim 6, characterized in that the means are further provided with
- a read/write input, linkable to the processor, for receiving read signals and write signals, the detection means being linked to the read/write input, and
- with a control input, linkable to the processor, for receiving control signals which correspond to addresses and are representative of numbers of bits the corresponding addresses consist of, the detection means being linked to the control input.

8. System comprising a processor, a memory and an arrangement for linking the processor to the memory, which arrangement is provided with means for generating, in response to a first address originating from the processor, data originating from the processor as a start address signal for the benefit of the memory, characterized in that the arrangement is provided with means for generating, in response to a second address originating from the processor, a further address signal for the benefit of the memory, which further address signal is a function of the start address signal and a number of second addresses received.

9. System according to Claim 8, characterized in that the arrangement is provided with means for receiving, in response to a write signal originating from the processor, data originating from the processor and feeding this data to the memory at a location corresponding to the further address signal, and for receiving, in response to a read signal originating from the processor, data originating from the memory, which data is located in the memory at a location corresponding to the further address signal, and feeding this data to the processor.

10. System according to Claim 8 or 9, characterized in that the arrangement comprises means for generating, in response to a third address originating from the processor, data originating from the processor as a different address signal for the benefit of the memory, and for generating, in response to a fourth address originating from the processor, the other address signal for the benefit of the memory.

11. System according to Claim 10, characterized in that the arrangement is provided with means for receiving, in response to a write signal originating from the processor, data originating from the processor and feeding this data to the memory at a location corresponding to the other address signal, and for receiving, in response to a read signal originating from the processor, data originating from the memory, which data is located in the memory at a location corresponding to the other address signal, and feeding this data to the processor.

12. System according to Claim 10 or 11, characterized in that the first address and the second address each correspond to data which comprises a first number of bits, and the fourth address corresponds to data which comprises a second number of bits, which differs from the first number of bits.

13. System according to any one of the preceding system claims, characterized in that the means are provided with
- an address input, linked to the processor, for receiving addresses,
- a data in/output linked to the processor,
- an address output, linked to the memory, for generating addresses,
- a data in/output linked to the memory,
- detection means, linked to the address input, for detecting addresses,
- counting means which are provided with a load input, linked to the data in/output, for loading data originating from the processor as address signals, with a count output, linked to the address output, for generating address signals, with a load control input, linked to the detection means, for receiving a load control signal, and with a count control input, linked to the detection means, for receiving a count control signal.

14. System according to Claim 13, characterized in that the means are further provided with
- a read/write input, linked to the processor, for receiving read signals and write signals, the detection means being linked to the read/write input, and
- with a control input, linked to the processor, for receiving control signals which correspond to addresses and are representative of numbers of bits the corresponding addresses consist of, the detection means being linked to the control input.
